(19) **Europäisches Patentamt**

**European Patent Office**

**Office européen des brevets**

(11) **EP 1 035 259 A1**

(12) **EUROPEAN PATENT APPLICATION**
published in accordance with Art. 158(3) EPC

(43) Date of publication:
**13.09.2000 Bulletin 2000/37**

(51) Int. Cl.[7]: **E03C 1/042**

(21) Application number: **98950417.0**

(86) International application number:
**PCT/JP98/04868**

(22) Date of filing: **28.10.1998**

(87) International publication number:
**WO 99/22081 (06.05.1999 Gazette 1999/18)**

(84) Designated Contracting States:
**AT BE CH DE DK ES FI FR GB GR IT LI NL PT SE**

(30) Priority: **28.10.1997 JP 31278697**

(71) Applicant: **TOTO LTD.**
**Kitakyushu-shi, Fukuoka-ken 802-8601 (JP)**

(72) Inventors:
• **NAKAMURA, Katsuaki**
  **Kita-kyushu-shi Fukuoka 802-8601 (JP)**
• **YUBISUI, Akira**
  **Kita-kyushu-shi Fukuoka 802-8601 (JP)**
• **NAKAI, Kazutsura**
  **Kita-kyushu-shi Fukuoka 802-8601 (JP)**
• **MORITA, Hironobu**
  **Kita-kyushu-shi Fukuoka 802-8601 (JP)**
• **YOSHIMURA, Koji**
  **Kita-kyushu-shi Fukuoka 802-8601 (JP)**

(74) Representative: **HOFFMANN - EITLE**
**Patent- und Rechtsanwälte**
**Arabellastrasse 4**
**81925 München (DE)**

(54) **METHOD OF WELDING FLOW PASSAGE-FORMING MEMBER, AND FLOW PASSAGE-FORMING MEMBER**

(57) An object of the present invention is to provide a method for welding conduit members which can control change in crystal structure at a joining portion by fusing only the joining portion within a short time by heating and conduit members. The method for welding conduit members of the present invention comprises, in a method for welding conduit members produced by preparing two or more members insides of which are hollow and integrally joining edge surfaces of the members by welding, irradiating electromagnetic wave to fuse both edge surfaces and weld them. When welding is carried out, it is preferred that at least one hollow member is fused and the one of hollow members is constituted by an alloy material containing at least two kinds of metals, and a boiling point of at least one kind of metal contained in the alloy material is lower than the melting point of the alloy material. The alloy material is preferably brass. The electromagnetic wave is preferably a YAG laser.

EP 1 035 259 A1

## Description

### 1. Technical field

This invention relates to a method for welding conduit members and a conduit member. Particularly, it relates to a method for welding conduit members which can control change of properties of crystal structure at the welded portion and a conduit member. It is also relates to a conduit member in which a surface roughness is reduced.

### 2. Background art

As a welding method for joining edge surfaces of two or more members inside of which is hollow with each other to produce a conduit member provided with a flow path in which a fluid flows, there has been known an electrical resistance welding as disclosed in Japanese Patent No. 2,626,898. That is, this electrical resistance welding is to cast two or more pipe member separately, face the edge surfaces of both pipe members to each other and flow a large current to both pipe members whereby said both edge surfaces are fused and welded due to heat by the electrical resistance between both edge surfaces.

By the way, welding for producing a conduit member is desirably to fuse only the joining portion by heating within a short time as a matter of course. However, according to the above-mentioned electrical resistance welding, rising up and going down of heating at both edge surfaces are slow so that a wide portion other than the joining portion at both edge surfaces are unnecessarily heated or a fusing state at the joining portion is unnecessarily maintained for a long time. According to this, there is a case that crystal structures at the joining portion of both edge surfaces sometimes cause change of properties. The conduit member is generally constituted by a crystal structure which is good in corrosion resistance so that if the crystal structure causes change of properties, corrosion resistance is lowered. As a result, when the conduit member is used by flowing a fluid such as water, etc., there is a problem of corroding at the joined portion by welding.

Also, the above-mentioned conduit member is prepared by casting separately two or more pipe members with a copper alloy and joining the edge surfaces of both pipe members by electrical resistance welding. Accordingly, said conduit member has a surface roughness which is specific for a cast product.

The present invention has been accomplished in view of the above circumstance, and an object thereof is to provide a method for welding conduit members which can control change of properties of crystal structure at the welded portion by heating only the joining portion within a short time and fusing, and a conduit member.

Another object of the present invention is to provide a conduit member, in a conduit member which is obtained by integrally joining edge surfaces of a hollow member which is divided two or more, in which a surface roughness is reduced.

### 3. Disclosure of the invention

A method for welding conduit members according to the first embodiment of the present invention comprises, in a method for welding conduit members produced by preparing two or more members insides of which are hollow and integrally joining edge surfaces of said members by welding, irradiating electromagnetic wave to fuse both edge surfaces and weld them.

In the method for welding conduit members according to the first embodiment, edge surfaces of members insides of which are hollow are fused by heating due to irradiation of electromagnetic wave, so that rapid heating and rapid cooling which are characteristic features of the electromagnetic irradiation can be effectively utilized. That is, by rapidly heating the joining portions at both edge surfaces of the above-mentioned members, narrow portions of the joining portion can be fused within a short time without heating unnecessarily wide portions other than said joining portion. According to this constitution, change in properties of the crystal structures at the joining portions can be prevented as little as possible.

The method for welding conduit members according to the second embodiment of the present invention comprises, in a method for welding conduit members produced by preparing two or more members insides of which are hollow and integrally joining edge surfaces of said members by welding, irradiating electromagnetic wave to the surface of said members to the direction inclined to a predetermined angle from a vertical direction so that said both edge surfaces are fused and welded. Also, the above-mentioned predetermined angle is desirably $10°$ or so.

In the method for welding the conduit member according to the second embodiment, when welding the hollow member, the electromagnetic wave is irradiated by inclining with a predetermined angle from the vertical line to the surface of the hollow member so that a reflected wave of the electromagnetic wave irradiated to the joining portion is prevented from directly incident to the electromagnetic head which is an irradiation portion of irradiating the electromagnetic wave.

The method for welding conduit members according to the third embodiment of the present invention comprises, in a method for welding conduit members produced by preparing two or more members insides of which are hollow and integrally joining edge surfaces of said members by welding, irradiating electromagnetic wave to the edge surface of said members and irradiating an assist gas so that said both edge surfaces are fused and welded. Also, the above-mentioned assist gas is preferably an inert gas or a nitrogen gas.

In the method for welding the conduit member according to the third embodiment, when welding the hollow member, an assist gas is blown to the welding portion so that oxidation at the welding portion can be prevented. As a result, the joining portion of the hollow member is not influenced a bad effect from an atmospheric gas at welding. Also, by blowing the assist gas, the electromagnetic wave can be hit the joining portion smoothly.

The method for welding conduit members according to the fourth embodiment of the present invention comprises, in a method for welding conduit members produced by preparing two or more members insides of which are hollow and integrally joining edge surfaces of said members by welding, forming a step portion at the edge portion of one of the above-mentioned members for overlapping one another, joining the edge portion of the other member to said step portion and irradiating electromagnetic wave to the joining portion whereby said edge surfaces are fused and welded.

In the method for welding the conduit member according to the fourth embodiment, at the edge portion of one of the members, a step portion for overlapping the edge portion of the other member is formed so that fixation of both members when welding is carried out becomes easy.

The method for welding conduit members according to the fifth embodiment of the present invention comprises, in a method for welding conduit members produced by preparing two or more members insides of which are hollow and integrally joining edge surfaces of said members by welding, having the first welding step of irradiating electromagnetic wave to fuse said edge surfaces to weld the portion, and the second welding step of irradiating electromagnetic wave and feeding a filler to melt said edge surface and said filler to weld the portion.

In the method for welding the conduit member according to the fifth embodiment, undercut occurs at the joining portion at the first welding step, but in the second welding step, welding is carried out while supplying a filler to the portion at which undercut occurred whereby the undercut can be buried.

The method for welding conduit members according to the sixth embodiment of the present invention comprises, in a method for welding conduit members produced by preparing two or more members insides of which are hollow and integrally joining edge surfaces of said members by welding, irradiating electromagnetic wave while weaving whereby said edge surfaces are fused and welded.

In the method for welding the conduit member according to the sixth embodiment, by irradiating electromagnetic wave while weaving, the electromagnetic wave can be irradiated to the region having a predetermined width of the joining portion of the edge surfaces of both members. Accordingly, irradiation of the electromagnetic wave outside the joining portion can be prevented.

The method for welding conduit members according to the seventh embodiment of the present invention comprises, in a method for welding conduit members produced by preparing two or more members insides of which are hollow and integrally joining edge surfaces of said members by welding, preferably dividing electromagnetic wave to the first and the second electromagnetic waves, irradiating said first electromagnetic wave so that said edge surfaces are fused and welded, and irradiating the second electromagnetic wave to the welded edge surfaces and feeding a filler to the same so that said edge surfaces and said filler are fused and welded.

In the method for welding the conduit member according to the seventh embodiment, the electromagnetic wave is divided into two, and a first welding is carried out by the first electromagnetic wave. At this time, undercut occurs at the joining portion. A second welding is carried out by the second electromagnetic wave with this. At this time, welding is carried out while feeding the filler to the undercut portion occurred at the first welding. Accordingly, the undercut can be buried by the filler.

The method for welding conduit members according to the eighth embodiment of the present invention comprises, in a method for welding conduit members produced by preparing two or more members insides of which are hollow and integrally joining edge surfaces of said members by welding, forming a thick portion at the neighbor of the edge surface of one member among the members, joining said edge surface to the edge surface of the other member, and irradiating electromagnetic wave to the joined portion and the thick portion whereby said edge surfaces are fused and welded.

In the method for welding the conduit member according to the eighth embodiment, a thick portion is formed at the neighbor of the edge surface of one member, and when the edge portion of the member and the edge portion of the other member are overlapped, a thick portion is formed at the joining portion. In this state, welding at the joining portion is carried out. According to this, even when undercut occurs at the joining portion, the undercut can be canceled by the thick part.

The method for welding conduit members according to the ninth embodiment of the present invention comprises, in a method for welding conduit members produced by preparing two or more members insides of which are hollow and integrally joining edge surfaces of said members by welding, a method for welding conduit members which welds said edge surfaces by irradiating electromagnetic wave, photographing the portion to be joined of said members, detecting from the photographed image data a difference in position at which the electromagnetic wave is to be irradiated, and irradiating the electromagnetic wave by correcting the difference.

In the method for welding the conduit member according to the ninth embodiment, from the image data photographed the joining portion, a difference in position at which the electromagnetic wave is to be irradiated is detected and the difference can be corrected so that welding failure occurred based on the difference of a welding point can be prevented.

Also, in the welding methods of conduit members according to the first embodiment to the ninth embodiment, when the above-mentioned welding is carried out, it is preferred that at least one of the hollow members is fused, and said one of the hollow members is constituted by an alloy material containing at least two kinds of metals and the boiling point of at least one of the metal contained in said alloy material is lower than the melting point of said alloy material. In such an alloy material, said metal having a lower boiling point is likely vaporized at the time of welding so that particularly rapid heating is required. By rapidly heating the joining portion of the member and fusing said joining portion within a short time, an amount of the metal having a lower boiling point contained in said alloy material disappeared at the time of welding can be made as little as possible.

As such an alloy material, brass is suitable. This is because, while the melting point of 35% Zn-brass is 904 to 935°C, the boiling point of Zn is 908°C and the possibility of disappearing a Zn component during welding is high.

Also, among brasses, a brass with an apparent Zn content of 25 wt% or more is suitable. When the apparent Zn content is 25 wt% or more, if it is cooled gradually after welding, a $\gamma$-phase is deposited so that there is a fear that the joined portion becomes brittle. However, in the method for welding conduit members according to the first embodiment to the ninth embodiment, the joining portion is rapidly heated by electromagnetic irradiation, so that the region other than the joining portion is not unnecessary heated, whereby it can be quenched when cooling the joining portion. As a result, a $\gamma$-phase is hardly deposited at the joining portion and brittleness at the joining portion can be prevented.

Here, the term "an apparent Zn content" is used in the meaning of "$\{(B+txQ)/(A+B+txQ)\}x100$" wherein A is a Cu content [wt%], B is a Zn content [wt%], t is a Zn equivalent of the third element (e.g., Sn), and Q is a content of the third element [wt%].

Incidentally, as the above alloy material, there may be mentioned a copper alloy containing Zn, or an alloy material containing a metal having a low boiling point such as As (boiling point: 613°C), Cd (boiling point: 767°C), Se (boiling point 684.9°C), etc. other than Zn. Also, in either of brass or a copper alloy containing Zn other than the brass, the method for welding conduit members according to the first embodiment to the ninth embodiment is effective when the apparent Zn equivalent of 8 wt% or more. When the apparent Zn equivalent is high, an effect of disappearance is remarkable.

Also, in the method for welding conduit members according to the first embodiment to the ninth embodiment, to heat the edge surface of a hollow member rapidly by irradiating the above electromagnetic wave, and to prevent heating other than the joining portion, it is preferred to focus the electromagnetic wave irradiated to the joining portion. Also, as the electromagnetic wave, it is preferred to use a laser beam, particularly a YAG laser. According to this constitution, the joining portion can be rapidly heated and rapidly cooled.

The method for welding conduit members according to the tenth embodiment of the present invention comprises a method for welding conduit members wherein members comprising a brass material or a member composed of the other metal material are prepared and at least the member comprising said brass material is fused by irradiating electromagnetic wave whereby welding said member and said metal material, and crystal structure before fusing the member comprising the above brass material satisfies at least one of the following (1) to (3). Incidentally, it is desirable that insides of the member comprising said brass material and the member comprising the other metal material are both hollow members.

    (1) An average crystal grain size is 15 $\mu$m or less, preferably 10 $\mu$m or less.
    (2) It contains a $\beta$-phase and an Sn concentration in the $\beta$-phase is 1.5 wt% or more.
    (3) It contains a $\gamma$-phase, an Sn concentration in the $\gamma$-phase is 8 wt% or more, and the $\gamma$-phase surrounds the $\beta$-phase.

That is, the present inventor has confirmed that the brass material having the crystal structures of the above-mentioned (1) to (3) shows superior properties in corrosion resistance as compared with the conventional brass material. These crystal structures consist of extremely precise crystal control and it has been found that if carelessness heat treatment, etc. is carried out, crystal structures are changed whereby corrosion resistance is impaired. Thus, in the method for welding conduit members according to the tenth embodiment, rapid heating and rapid cooling are carried out at welding by using electromagnetic wave so that change in properties of crystal structure at the joining portion at the time of welding can be prevented and impairment of corrosion resistance at the welding portion can be prevented as little as possible. Also, the conduit member is desirably prepared according to the above-mentioned welding method. This is because in the conduit member, a quality required for corrosion resistance is severe.

Also, in the method for welding conduit members according to the tenth embodiment, it is preferred to focus the electromagnetic wave to the joining portions of both members. Also, as the electromagnetic wave, in addition to infrared focus heating, etc., it is suitable to use a laser beam, and more suitable to use a YAG laser. Also, it is preferred to fuse the joining portion of the both members by electromagnetic induction heating, etc.

A method for welding conduit members according to the eleventh embodiment of the present invention comprises two of metal members being integrally joined by welding in a pressurized atmosphere higher than the atmospheric pressure and formed. Also, it is possible to weld the above-mentioned two metal members by forming a molten pool in at least one of the metal members. In this case, there is an advantage that there is a high possibility of vaporizing a component in one of the metal members to which the molten pool is formed and the components in the other metal member are not affected by them.

Also, in the method for welding conduit members according to the eleventh embodiment, which is a method for welding conduit members wherein at least one of the above-mentioned two metal members is a member comprising an alloy material containing at least two kinds of metals, and the above-mentioned two metal members are welded by fusing at least said member, and it is preferred that a boiling point of at least one kind of a metal contained in the above-mentioned alloy material is lower than the melting point of the above-mentioned alloy material. In such an alloy material, as described above, there is a high possibility of disappearing the metal having a low boiling point during welding so that it is particularly preferred to use the method for welding conduit members according to the eleventh embodiment.

Also, a boiling point of the components contained at the joining portion to be fused can be heightened by carrying out welding in an atmosphere at a higher pressure than the atmospheric pressure as described above. Therefore, disappearance of the components contained at the joining portion by vaporization during welding can be prevented and change in properties of said joining portion can be prevented as little as possible. Also, by raising the boiling point as mentioned above, disappearance of the components contained at the joining portion during welding can be prevented as little as possible even if a device which can carry out rapid heating or rapid cooling is not used as an energy source for welding the joining portion. As a result, a flexibility of selecting an energy source for welding the joining portion can be enlarged.

Also, it is suitable for using brass as the above-mentioned alloy material, particularly preferably a brass having an apparent Zn content of 25 wt% or more is used. In this case, a γ-phase is hardly deposited at the joining portion as mentioned above and an effect of preventing brittleness of the joining portion can also be accomplished.

Incidentally, as the above-mentioned alloy materials, it is possible to use, in addition to the brass, a copper alloy containing Zn, an alloy material containing a metal having a low boiling point such as As (boiling point: 613°C), Cd (boiling point: 767°C), Se (boiling point 684.9°C), etc. other than Zn.

Also, in the method for welding conduit members according to the eleventh embodiment, it is preferred to form an atmosphere of a higher pressure than the atmospheric pressure by an inert gas or a nitrogen gas. According to this, a bad effect to the metal material by the atmosphere at the welding can be made little.

Also, as a method for realizing the atmosphere of a higher pressure than the atmospheric pressure, there is a method of arranging the above-mentioned two joining portions of metal materials in a pressure vessel, and maintaining the inner pressure of said pressure vessel under pressurized atmosphere. Also, as the other method, there is a method of blowing a gas to said joining portion to make the pressure atmosphere higher than the atmospheric pressure without using any pressure vessel.

Also, in the method for welding conduit members according to the eleventh embodiment, it is preferred to fuse said metal members by irradiating electromagnetic wave to said metal members from outside the above-mentioned pressure vessel. The reason why an energy source for welding the joining portion is provided at the outside the pressure vessel as mentioned above is as follows. If the energy source is provided inside the pressure vessel, said energy is required to have durability against the pressurized atmosphere inside of said vessel, but if the energy source is provided outside of said vessel, it is not necessary to consider such a problem.

Also, it is preferred to focus said electromagnetic wave passed through the transmitting portion formed to said pressure vessel to the joining portion for welding said metal members. Also, said electromagnetic wave is preferably more focused to said joining portion when it is irradiated than passed through said transmitting portion. The electromagnetic wave as an energy source is irradiated by focusing to the joining portion as described above, so that the pressure vessel interposed between the energy source and the joining portion can be prevented from heating as little as possible. This is because heating by an electromagnetic wave irradiation requires no medium and an energy density when passing through said transmitting portion can be lowered. Also, the reason why the electromagnetic wave is focused to the joining portion is that a rapid heating and rapid cooling by a high energy can be more suitably realized.

Incidentally, when the electromagnetic wave at the outside of said pressure vessel is focused and the focused electromagnetic wave is irradiated to said joining portions provided at the inside of said pressure vessel, it is preferred to apply a measure to avoid temperature raising at the transmitting portion. Also, as a method of heating the joining portion by irradiating electromagnetic wave, it is possible to use an electromagnetic induced heating.

Also, in the method for welding conduit members according to the eleventh embodiment, as electromagnetic wave to be focused, in addition to an infrared focused heating, etc., a laser beam, particularly a YAG laser is preferably used. According to this, the joining portion can be rapidly heated and rapidly cooled with a high density and the portion other than the joining portion can be prevented from being heated as little as possible.

Also, in the method for welding conduit members according to the first embodiment to the eleventh embodiment, it is preferred that said conduit member is a water-spitting device which spits out water.

Conduit members according to the twelfth embodiment of the present invention comprise, in conduit members produced by integrally joining edge surfaces of members insides of which are hollow and divided into at least two or more by welding, said members are formed by applying forging and cutting processing to rod materials. Also, the hollow shape at the inside of said member is preferably formed by applying forging and cutting processing to a rod material.

In the conduit members according to the twelfth embodiment, the hollow members are formed by applying forging and cutting processing to the rod materials so that surface roughness of the conduit members can be made small. Incidentally, in conduit members formed by applying forging and cutting processing to rod materials without using welding, surface roughness can be also lowered.

Also, in the conduit members according to the twelfth embodiment, both of the above hollow members comprise brass materials, welding is carried out by fusing at least one of the members, and the crystal structures of the above brass materials at forging desirably satisfy the following (1) or (2):

(1) In a recrystallization temperature region, an average crystal grain size is 15 μm or less, preferably 10 μm or less, an area ratio of a β-phase is 30 to 80% and an α-phase and the β-phase are uniformly dispersed.
(2) In a recrystallization temperature region, an average crystal grain size is 15 μm or less, preferably 10 μm or less, an area ratio of an α-phase is 44 to 65%, an area ratio of a β-phase is 10 to 55% and an area ratio of a γ-phase is 1 to 25%, and the α-phase, the β-phase and the γ-phase are uniformly dispersed.

Also, it is preferred that the above hollow members are formed by forging at a temperature region of 650°C or lower. Also, it is preferred that both of the above hollow members comprise brass materials, welding is carried out by fusing at least one of the members, and said members are prepared by forging at a temperature region of 650°C or lower.

That is, the present applicant confirmed that the brass material having the crystal structure of the above-mentioned (1) and (2) shows an excellent hot ductility (forgeability) at a low temperature region of 650°C or lower as compared with the conventional brass materials, and when such a brass material is used, it could be found that forging of hollow members can be carried out easily. Accordingly, by forming a hollow member by welding brass materials subjected to forging at a low temperature region of 650°C or lower, both of realization of high precision shape due to low temperature forging and realization of complicated shape due to welding can be established. Also, in the conduit member according to the twelfth embodiment, the brass material has a crystal structure of the above-mentioned (1) and (2), and it is desired that the crystal structures of said hollow members before fusing said members satisfy at least one of the following (1) to (3).

(1) An average crystal grain size is 15 μm or less, preferably 10 μm or less.
(2) It contains a β-phase, and an Sn concentration in the β-phase is 1.5 wt% or more.
(3) It contains a γ-phase, an Sn concentration in the γ-phase is 8 wt% or more and the γ-phase surrounds the β-phase.

It is already described that the above-mentioned crystal structures of (1) to (3) have excellent properties as compared with those of the conventional brass material. This is because it is extremely suitable to use the brass material having these crystal structures as the conduit members.

Also, in the conduit members according to the twelfth embodiment of the present invention, the above-mentioned conduit members are preferably a water-spitting device which spits out water. This is because the water-spitting device is required to have a beauty appearance.

4. Brief description of the drawings

Fig. 1 is a schematic drawing showing a welding device for explaining the method for welding conduit members according to the first embodiment of the present invention.
Fig. 2 is a schematic sectional view showing a method for welding conduit members according to the second embodiment of the present invention.
Figs. 3(a) and (b) are schematic drawings explaining methods of fixing two hollow members about the welding methods of conduit members according to the first and second embodiments of the present invention.

Figs. 4(a) to (c) are schematic drawings explaining filler welding using the welding methods of conduit members according to the first and second embodiments of the present invention.

Fig. 5 is a schematic drawing explaining weaving welding using the welding methods of conduit members according to the first and second embodiments of the present invention.

Fig. 6 is a constitutional view explaining the welding method which can carry out the filler welding with one welding.

Figs. 7(a) and (b) are constitutional views explaining welding without a filler which can prevent occurrence of undercut.

Fig. 8(a) is a schematic device constitutional view explaining the welding method to which a method of correcting a positional error of a welding point to the welding methods of conduit members according to the first and second embodiments of the present invention. Fig. 8(b) is a drawing showing an image photographed by a CCD camera shown in Fig. 8(a).

Fig. 9 is a constitutional view explaining the welding method in which a plural number of robots carry out welding operation by cooperation using the welding methods of conduit members according to the first and second embodiments of the present invention.

Figs. 10(a) to (c) are drawings showing wave shapes of laser beam used for the above-mentioned welding methods.

Fig. 11 is a sectional view showing a water-spitting device to which the present invention is applied.

Fig. 12 is a sectional view showing a water-stopping tap to which the present invention is applied.

Fig. 13 is a schematic view showing a constructing image of a hot-water and water-mixing faucet to which the present invention is applied.

Figs. 14(a) to (c) are appearance views and sectional views showing a two-valve type hot-water and water-mixing faucet to which the present invention is applied.

Figs. 15(a) and (b) are appearance views and sectional views showing a single-valve type hot-water and water-mixing faucet to which the present invention is applied.

Figs. 16(a) and (b) are appearance views and sectional views showing a faucet for a washstand to which the present invention is applied.

Figs. 17(a) and (b) are an appearance view, joining image views and sectional views showing a faucet for a kitchen to which the present invention is applied.

5. Best modes for practicing the invention

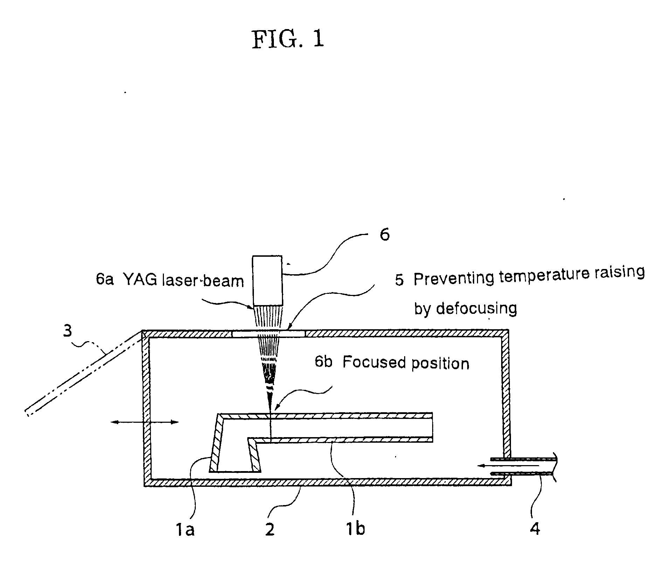

Fig. 1 is a schematic drawing showing a welding device for explaining the method for welding conduit members according to the first embodiment of the present invention. This welding device has a pressure vessel 2, and edge surfaces of tubular members 1a and 1b are joined to each other in the pressure vessel 2. The tubular members 1a and 1b are, for example, made of brass, and welded in the pressure vessel 2 with each other and used as a pipe for water.

The pressure vessel 2 is provided with an open-close shutter 3 for taking in and out the tubular members 1a and 1b, and an inlet 4 for introducing an inert gas or a nitrogen gas inside said vessel 2. The inlet 4 is connected to a feeding apparatus (not shown in the figure) for feeding the inert gas or the nitrogen gas. This feeding device is so constituted that the inner pressure of said vessel 2 can be heightened than the atmospheric pressure; for example, 0.2 atm or so by feeding the inert gas or the nitrogen gas to inside of the pressure vessel 2 through the inlet 4.

At an outer wall of the pressure vessel 2, a transmission window 5 for transmitting a laser beam is formed. At outside of the pressure vessel 2, a YAG laser irradiation device 6 is arranged. This YAG laser irradiation device 6 is so constituted that a high density YAG laser beam 6a is irradiated to the joining portion of the tubular members 1a and 1b provided in the pressure vessel 2 through the transmission window 5. Also, the YAG laser beam 6a is so irradiated that the density becomes gradually high as come up to the joining portion of the tubular members 1a and 1b as shown in Fig. 1, and said joining portion and a focused position 6b of said laser beam 6a correspond to each other. Accordingly, an exothermic amount due to the YAG laser beam 6a at the transmission window 5 can be restricted as little as possible.

Next, in the above welding device, a method of welding the tubular members 1a and 1b is explained.

The tubular members 1a and 1b are arranged in the pressure vessel 2 by opening the open-close shutter 3. At this time, the tubular members 1a and 1b are arranged therein in the state that the edge surfaces of both members are contacted with each other. Next, an inert gas or a nitrogen gas is fed into the pressure vessel 2 by a feeding device through the inlet 4, and the pressure of inside said vessel 2 is raised up to 1.2 atom or so. Thereafter, the YAG laser beam 6a is irradiated into the pressure vessel 2 from the irradiation device 6 through the transmission window 5, and said laser beam 6a is focused at the joining portion of the tubular members 1a and 1b whereby one of the tubular members is fused to form a molten pool, then, said tubular member is cooled to join to the other tubular member.

According to the above-mentioned first embodiment, the YAG laser is used when the tubular members 1a and 1b are joined, the joining portion can be rapidly heated and also rapidly cooled. Thus, an unnecessary portion other than the joining portion can be prevented from heating. According to this constitution, the crystal structure at the joining portions can be prevented from changing in properties at welding as little as possible.

Also, when tubular members 1a and 1b made of brass are used, there is a possibility of vaporizing the Zn component during welding. According to this constitution, crystal structures at the welding portion of tubular members are changed in properties, and as the result, corrosion resistance of the tubular members sometimes lowered. This is because, for example, while the melting point of a 35% Zn-brass is 904 to 935°C, the boiling point of Zn is 908°C. Accordingly, the above-mentioned welding method is effective when tubular members made of brass are welded. Also, it is effective when a piping for water, etc. is prepared. The piping for water is required to maintain high corrosion resistance even at the joining portion.

Also, the boiling point of Zn in the tubular member can be heightened by heightening a pressure atmosphere when the tubular members made of brass are welded than the atmospheric pressure. According to this, vaporization of the Zn component in the tubular member can be prevented as little as possible, and as the result, the crystal structure at the welding portion can be prevented from changing in properties as little as possible.

Also, in the inside of the pressure vessel 2 is filled with an inert gas or a nitrogen gas so that the joining portion of the tubular members is not suffered from any bad effect from the atmospheric gas at welding.

Incidentally, in the above-mentioned first embodiment, a YAG laser beam is used when welding is carried out, but other laser beams can be used when welding is carried out. Also, other electromagnetic waves can be used when welding is carried out, and an electromagnetic induction heating can be used when welding is carried out.

Also, in the present embodiment, whereas the above-mentioned welding method is applied to the tubular members 1a and 1b, it is possible to apply the above-mentioned welding method to the other members and, for example, it is possible to apply it to conduit members other than tubular members provided with a route through which a fluid flows.

Also, in the present embodiment, whereas welding is carried out by forming a molten pool by fusing one of the tubular members 1a and 1b, it is possible to weld by forming molten pools by fusing both of the tubular members.

Also, in the present embodiment, whereas the above-mentioned welding method is applied to tubular members 1a and 1b made of brass, the material of the tubular member is not limited only to brass and the above-mentioned welding method can be applied to tubular members made of other materials. For example, it can be applied to a tubular member made of a copper alloy containing Zn. Also, the above-mentioned welding method can be applied to a tubular material comprising a metal contained in an alloy material which has a boiling point lower than the melting point of said alloy material.

The welding method according to the present embodiment is preferably applied to tubular members at least one of which comprises the following brass material. This is because rapid heating and rapid cooling are more required when the tubular materials are welded.

In the tubular member comprising the first brass material, the crystal structure before welding satisfies at least one of the following (1) to (3).

(1) An average crystal grain size is 15 μm or less, preferably 10 μm or less.
(2) It contains a β-phase and an Sn concentration in the β-phase is 1.5 wt% or more.
(3) It contains a γ-phase, an Sn concentration in the γ-phase is 8 wt% or more and the γ-phase surrounds the β-phase.

The present applicants have already confirmed in the previously filed PCT/JP87/03152 that the brass material having the crystal structures of the above (1) to (3) shows properties excellent in corrosion resistance as compared with the conventional brass material. These crystal structures consist of extremely precise crystal control and it has been found that if carelessness heat treatment, etc. is carried out, crystal structures are changed whereby corrosion resistance is impaired. Thus, in the method for welding conduit members according to the present embodiment, rapid heating and rapid cooling are carried out at welding by using a YAG laser so that change in properties of crystal structures at the joining portions can be prevented and corrosion resistance at the welding portion can be maintained.

As the tubular members 1a and 1b comprising the second brass material, it is a material in which an apparent Zn content of said brass material is 25 wt% or more. In the case of this brass material, rapid heating and rapid cooling are more required. Because at the apparent Zn content is 25 wt% or more, a brittle γ-phase is deposited at the welded joining portion when it is gradually cooled after welding, so that there is a fear that said joining portion becomes brittle. However, if the welded joining portion is rapidly cooled, the γ-phase is hardly deposited so that brittleness of said joining portion can be prevented.

Here, the term "an apparent Zn content" is used in the meaning of "$\{(B+txQ)/(A+B+txQ)\}x100$". In the formula, A is a Cu content [wt%], B is a Zn content [wt%], t is a Zn equivalent of the third element (e.g., Sn), and Q is a content of the third element [wt%].

As the third tubular members 1a and 1b, it is formed by applying a forging and cutting processing to rod materials. By forming said tubular member 1a and said tubular member 1b not by casting but by forging, surface roughness of a pipe for water after welding can be made small. In these tubular members 1a and 1b, more specifically, crystal structures at forging desirably satisfy the following (A) or (B).

(A) At a recrystallization temperature region, an average crystal grain size is 15 μm or less, preferably 10 μm or less, and an area ratio of a β-phase is 30 to 80% and an α- and β-phases are uniformly dispersed.
(B) At a recrystallization temperature region, an average crystal grain size is 15 μm or less, preferably 10 μm or less, and an area ratio of an α-phase is 44 to 65%, an area ratio of a β-phase is 10 to 55%, an area ratio of a γ-phase is 1 to 25%, and the α-, β- and γ-phases are uniformly dispersed.

The present applicants have already confirmed in the previously filed PCT/JPB7/03152 that the brass material having the crystal structures of the above (A) and (B) shows properties excellent in hot ductility (forgeability) at a low temperature region of 650°C or lower as compared with the conventional brass material, and when such a brass material is used, it could be found that forging of hollow members such as tubular members 1a and 1b can be carried out easily. Accordingly, by forming a hollow member by welding brass materials subjected to forging at a low temperature region of 650°C or lower, both of realizations of high precision shape due to low temperature forging and realization of complicated shape due to welding can be established.

Also, it has been confirmed that brass materials having such crystal structures show properties excellent in corrosion resistance as compared with the conventional brass materials. These crystal structures consist of extremely precise crystal control and it has been found that if carelessness heat treatment, etc. is carried out, crystal structures are changed whereby corrosion resistance is impaired. Thus, in the method for welding conduit members according to the present embodiment, rapid heating and rapid cooling are carried out at welding by using a YAG laser so that change in properties of crystal structures at the joining portions can be prevented and corrosion resistance at the welding portion can be maintained.

In the tubular members 1a and 1b having the above-mentioned crystal structure (A) or (B), it is further desired that the crystal structure before welding satisfies at least one of the following (1) to (3).

(1) An average crystal grain size is 15 μm or less, preferably 10 μm or less.
(2) It contains a β-phase and an Sn concentration in the β-phase is 1.5 wt% or more.
(3) It contains a γ-phase, an Sn concentration in the γ-phase is 8 wt% or more and the γ-phase surrounds the β-phase.

The brass material having the crystal structures of the above (1) to (3) shows properties excellent in corrosion resistance as compared with the conventional brass material as described above, and it is extremely suitable to use the brass materials having these crystal structures for conduit members.

Next, using form of the tubular members 1a and 1b made of brass after welding is explained. Incidentally, all the members explained below are to have the crystal structures (1) to (3) mentioned above before fusing, and among the members explained below, all the members formed by forging are to have the crystal structures (A) or (B) mentioned above.

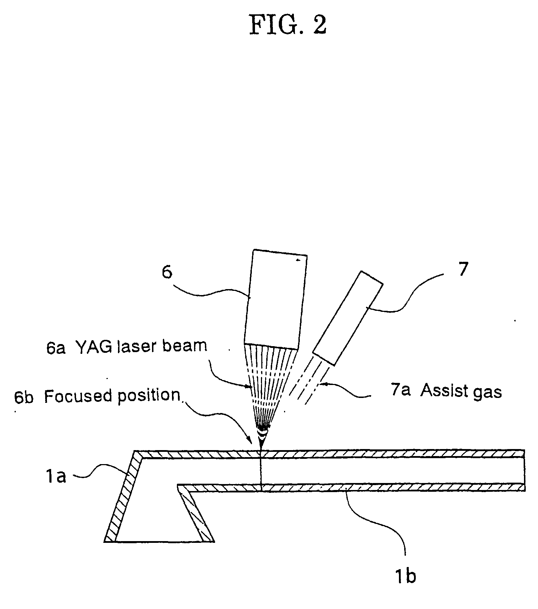

Fig. 2 is a schematic sectional view showing a method for welding conduit members according to the second embodiment of the present invention, and the same reference numerals are attached to the same portions as in Fig. 1 and the same explanation is partially omitted.

In this welding device, a pressure vessel is not provided but an assist gas injection device 7. This injection device 7 is to inject an assist gas 7a such as a nitrogen gas or an inert gas, etc. to the joining portion of tubular members when the tubular members 1a and 1b are welded. Also, the welding device has a YAG laser irradiation device 6. This YAG laser irradiation device 6 is so constituted that a high density YAG laser beam 6a is irradiated to the joining portion of the tubular members 1a and 1b to the direction inclined to a predetermined angle (for example, 10° or so) from a vertical direction of the surface of the tubular members. Also, the YAG laser beam 6a is so irradiated that the density becomes gradually high as cone up to the joining portion of the tubular members 1a and 1b as shown in Fig. 2, and said joining portion and a focused position 6b of said laser beam 6a correspond to each other.

Next, in the above-mentioned welding device, a method of welding the tubular members 1a and 1b is explained.

First, the tubular members 1a and 1b made of brass are arranged with the state that the edge surfaces of both members are contacted to each other. Next, by the assist gas-injection device 7, an assist gas 7a such as an inert gas or a nitrogen gas, etc. is fed at the joining portion of the tubular members. Thereafter, a YAG laser beam 6a is irradiated from the irradiation device 6 to said joining portion to the direction inclined to a predetermined angle from a vertical direction of the surface of the tubular members, and said laser beam 6a is focused at the joining portion of the tubular members 1a and 1b to form a molten pool by fusing one of the tubular members, and then cooling said tubular member to join to the other tubular member.

According to the above second embodiment, when the tubular members 1a and 1b are welded, a YAG laser is used so that the joining portion can be rapidly heated as well as rapidly cooled. Thus, the unnecessary portion other than the joining portion can be prevented from heating. According to this, change in properties of the crystal structures of the joining portion can be prevented as little as possible at welding.

Also, tubular members 1a and 1b made of brass are used, there is a possibility of vaporizing the Zn component during welding, but according to the above-mentioned welding method, the joining portion can be rapidly heated as well as rapidly cooled so that it is effective at the time of welding the tubular members 1a and 1b made of brass. Also, it is effective when a piping for water, etc. is to be prepared. This is because, in the piping for water, it is required to maintain high corrosion resistance even at the joining portion.

Also, when tubular materials made of brass are welded, an assist gas 7a such as an inert gas or a nitrogen gas, etc. is sprayed at the joining portion, oxidation at the joining portion can be prevented. As a result, the joining portion of the tubular members is not suffered from any bad effect from an atmospheric gas at welding. Also, by spraying the assist gas 7a, the YAG laser beam 6a can be hit at the joining portion smoothly.

Also, when the tubular members are welded, the YAG laser is irradiated by inclining with a predetermined angle from the vertical line to the surface of the members so that a reflected light of the laser beam irradiated to the joining portion is prevented from directly incident to the laser head which is an irradiation portion of irradiating the YAG laser beam.

Also, the YAG laser beam can be transmitted by an optical fiber so that a degree of freedom of the welding operation can be heightened.

Incidentally, in the above-mentioned second embodiment, a YAG laser beam is used when welding is carried out, but other laser beam can be used when welding is carried out. Also, other electromagnetic wave may be used when welding is carried out, and an electromagnetic induction heating can be used when welding is carried out.

Also, in the present embodiment, whereas the above-mentioned welding method is applied to tubular members 1a and 1b, it is possible to apply the above-mentioned welding method to the other members. For example, it is possible to apply it to conduit members other than tubular members provided with a route through which a fluid flows.

Also, in the present embodiment, whereas welding is carried out by forming a molten pool by fusing one of the tubular members 1a and 1b, it is also possible to weld by fusing both tubular members to form molten pools.

Also, in the present embodiment, whereas the above-mentioned welding method is applied to tubular members 1a and 1b made of brass, a material of the tubular members is not limited to a material comprising brass, it is possible to apply the above-mentioned welding method to tubular members made of other materials. For example, it is possible to apply it to tubular members made of a copper alloy containing Zn, moreover, it is also possible to apply the above-mentioned welding method to tubular members in which a boiling point of a metal contained in an alloy material is lower than the melting point of said alloy material.

The welding method according to the present embodiment is preferably applied to tubular members at least one of which comprises the following brass material. This is because rapid heating and rapid cooling are required when the tubular member is welded.

In the tubular member comprising the first brass material, crystal structure thereof before welding satisfies at least one of the following (1) to (3).

(1) An average crystal grain size is 15 $\mu$m or less, preferably 10 $\mu$m or less.
(2) It contains a $\beta$-phase and an Sn concentration in the $\beta$-phase is 1.5 wt% or more.
(3) It contains a $\gamma$-phase, an Sn concentration in the $\gamma$-phase is 8 wt% or more, and the $\gamma$-phase surrounds the $\beta$-phase.

As the tubular members 1a and 1b comprising the second brass material, there may be mentioned a material in which an apparent Zn content of said brass material is 25 wt% or more.

As the third tubular members 1a and 1b, it is formed by applying a forging and cutting processing to rod materials. By forming said tubular member 1a and said tubular member 1b not by casting but by each forging, surface roughness of a pipe for water after welding can be made small. In these tubular members 1a and 1b, more specifically, crystal structures at forging desirably satisfy the following (A) or (B).

(A) At a recrystallization temperature region, an average crystal grain size is 15 $\mu$m or less, preferably 10 $\mu$m or less, and an area ratio of a $\beta$-phase is 30 to 80% and an $\alpha$- and $\beta$-phases are uniformly dispersed.
(B) At a recrystallization temperature region, an average crystal grain size is 15 $\mu$m or less, preferably 10 $\mu$m or less, and an area ratio of an $\alpha$-phase is 44 to 65%, an area ratio of a $\beta$-phase is 10 to 55%, an area ratio of a $\gamma$-phase is 1 to 25%, and the $\alpha$-, $\beta$- and $\gamma$-phases are uniformly dispersed.

In the tubular members 1a and 1b having the above-mentioned crystal structure (A) or (B), it is further desired that the crystal structure before welding satisfies at least one of the following (1) to (3).

(1) An average crystal grain size is 15 $\mu$m or less, preferably 10 $\mu$m or less.
(2) It contains a $\beta$-phase and an Sn concentration in the $\beta$-phase is 1.5 wt% or more.
(3) It contains a $\gamma$-phase, an Sn concentration in the $\gamma$-phase is 8 wt% or more and the $\gamma$-phase sur-

rounds the β-phase.

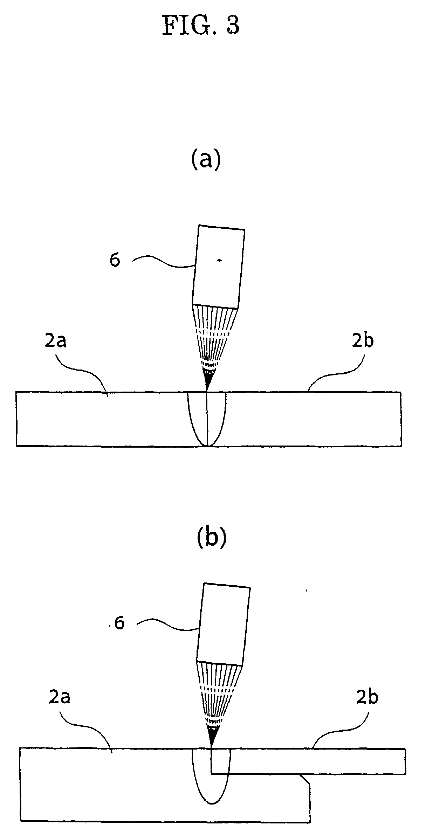

Figs. 3(a) and (b) are schematic drawings explaining methods of fixing two hollow members with regard to the welding methods of conduit members according to the first and second embodiments of the present invention.

Fig. 3(a) is a schematic drawing showing a fixing method by I-shaped butt. This fixing method by the I-shaped butt is to fix the members by contacting the edge surface of a hollow member 2a and the edge surface of a hollow member 2b.

Fig. 3(b) is a schematic drawing showing a fixing method by uneven butt. At the edge surface of the hollow member 2a, a step portion which can overlap with the edge portion and neighbor of the other hollow member 2b is provided. Accordingly, the fixing method by uneven butt is to fix with the state in which the edge portion of the hollow member 2b is overlapped with the step portion of the hollow member 2a.

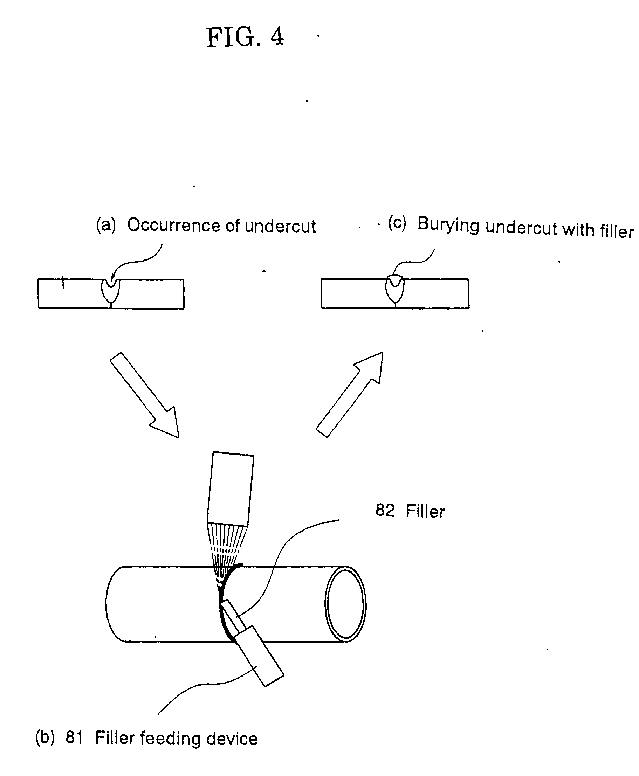

Figs. 4(a) to (c) are schematic drawings explaining filler welding using the welding methods of conduit members according to the first and second embodiments of the present invention.

First, welding at the first time is carried out by using the above-mentioned welding method. According to this, as shown in Fig. 4(a), Zn disappears by heating so that a hollow which is called as an undercut occurs at the joining portion.

Next, using the above-mentioned welding method, welding at the second time is carried out. At this time, as shown in Fig. 4(b), welding is carried out by feeding a filler 82 at the portion at which defect of the material occurred by a filler feeding device 81. Therefore, as shown in Fig. 4 (C), the defect of the material can be buried.

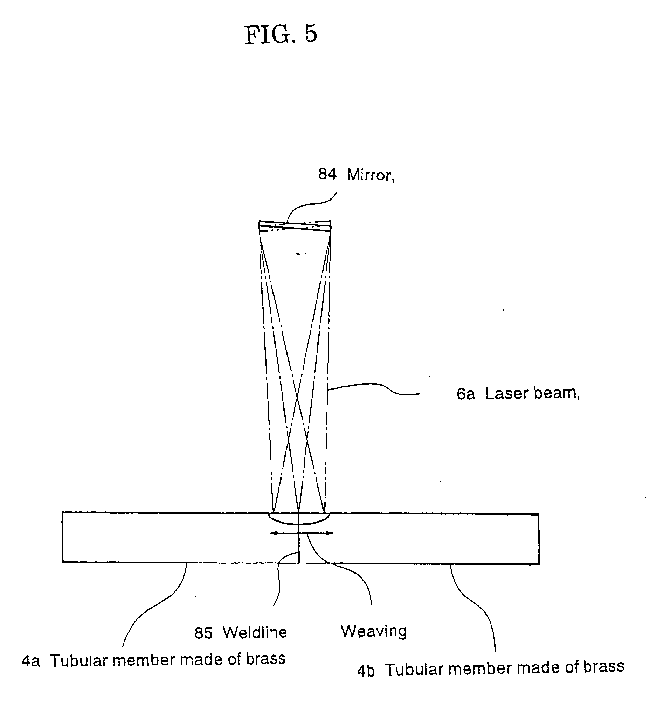

Fig. 5 is a schematic drawing explaining weaving welding using the welding methods of conduit members according to the first and second embodiments of the present invention.

When the joining portion of a tubular member 4a made of brass and a tubular member 4b made of brass is welded, by weaving a laser beam 6a using a mirror 84, a laser beam 6a can be irradiated to the region having a predetermined width to a weldline 85. Accordingly, the laser line can be prevented from running off from the weldline. Incidentally, such a weaving welding is used particularly when welding is carried out by feeding a filler.

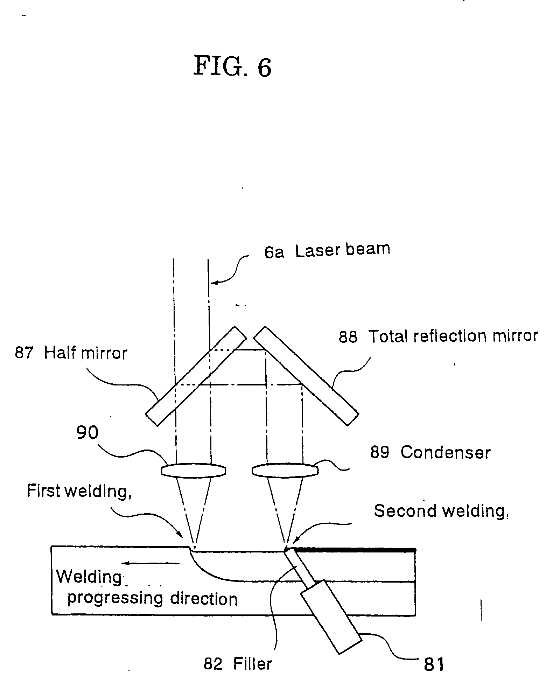

Fig. 6 is a constitutional view explaining the welding method which can carry out the filler welding with one welding.

Part of a laser beam 6a is transmitted through a half mirror 87 and the laser beam is focused by a condenser 90. According to this, a first welding is carried out to the members but at this time, undercut occurs. Simultaneously, part of the laser beam 6a is reflected by the half mirror 87, the reflected light is totally reflected by a total reflection mirror 88 and the laser beam is focused by a condenser 89. According to this, a second welding is carried out to the members. At this time, at the undercut portion occurred at the first welding, welding is carried out by feeding a filler 82 by a filler feeding device 81. Accordingly, the undercut can be buried by the filler 82.

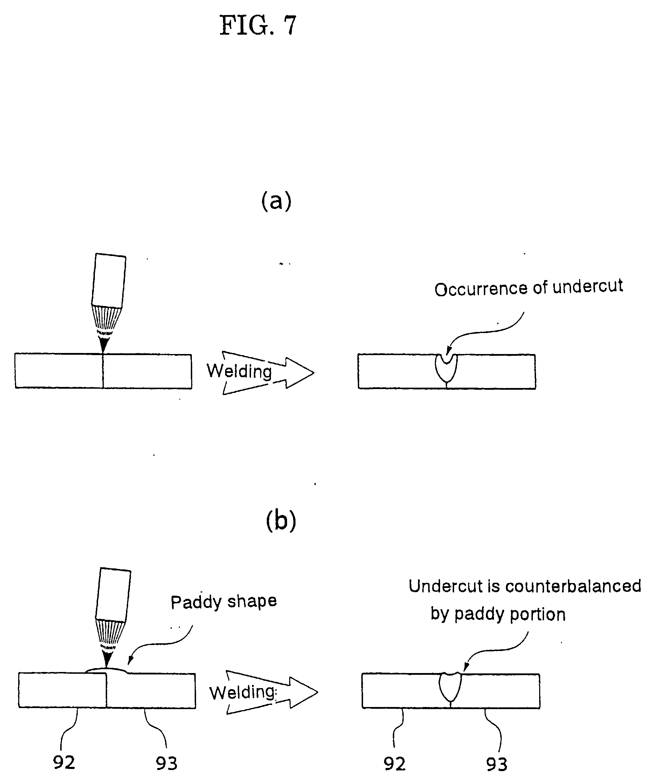

Figs. 7(a) and (b) are constitutional views explaining welding without a filler which can prevent occurrence of undercut.

Fig. 7(a) shows a usual welding, and undercut occurs at this case. To the contrary, Fig. 7(b) shows a welding method which does not occur undercut without a filler. That is, the edge portion of one member 93 is previously made a paddy shape. When the edge portion of the member 93 and the edge portion of the other member 92 are overlapped, a paddy portion is formed at the joining portion. In this state, welding at the joining portion is carried out by the above-mentioned welding method. Then, even when defect of the material occurs at the joining portion, the defect of the material can be counterbalanced by the paddy portion. Accordingly, even when filler welding is not carried out, occurrence of undercut can be prevented.

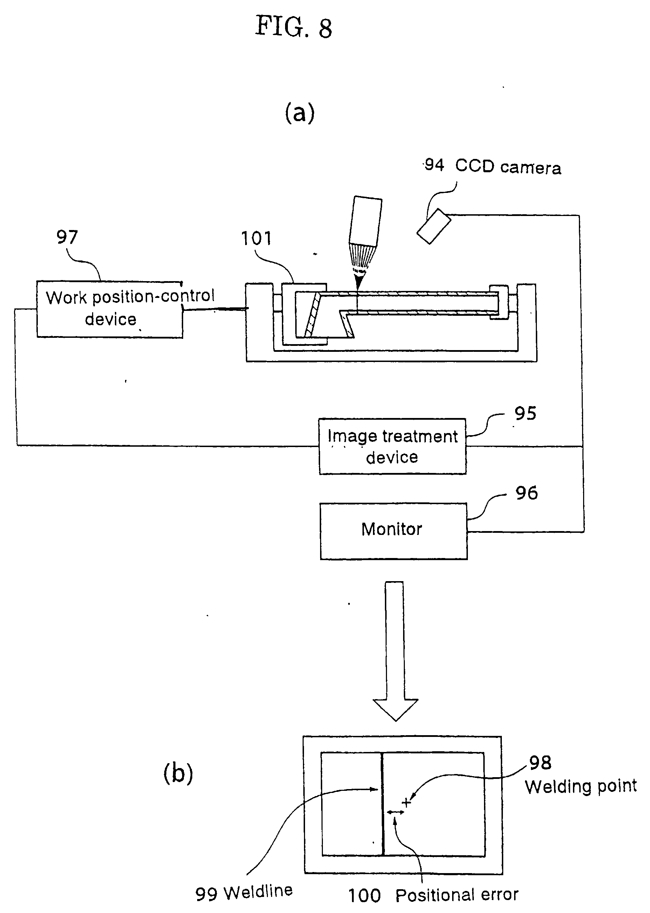

Fig. 8(a) is a schematic device constitutional view explaining the welding method to which a method of correcting a positional error of a welding point to the welding methods of conduit members according to the first and second embodiments of the present invention. Fig. 8(b) is a drawing showing an image photographed by a CCD camera shown in Fig. 8(a).

As shown in Fig. 8(a), a CCD camera 94 is provided in this welding device, and the CCD camera 94 is a camera for photographing a welding point, to which a YAG laser beam is irradiated, at the initial stage. This CCD camera 94 is connected to an image treatment device 95 through a wiring, and the image treatment device 95 is to treat photographed data transferred from the CCD camera 94. The image treatment device 95 is connected to a work position-control device 97 through a wiring. The work position-control device 97 is to control the position of a fixing means 101 for fixing the members to be welded for correcting a positional error 100 between a welding point 98 and a weldline 99 shown in Fig. 8(b). Also, the CCD camera 94 is also connected to a monitor 96, and the monitor 96 is to display an image photographed by the CCD camera 94.

Next, movements of the above-mentioned welding device are explained.

First, an initial welding point 98 is photographed by a CCD camera 94. At that time, when the positions of said welding point 98 and a weldline 99 are not in their proper position, its positional discrepancy 100 is detected by an image treatment device 95. Next, discrepancy of the welding point is corrected by moving a fixing means 101 under control of a work position-control device 97 with a distance corresponding to the positional discrepancy. Thereafter, welding by a YAG laser beam is started.

According to the above welding method, even when the welding point is not in its proper position, its discrepancy can be corrected so that welding failure caused by discrepancy of the welding point can be prevented.

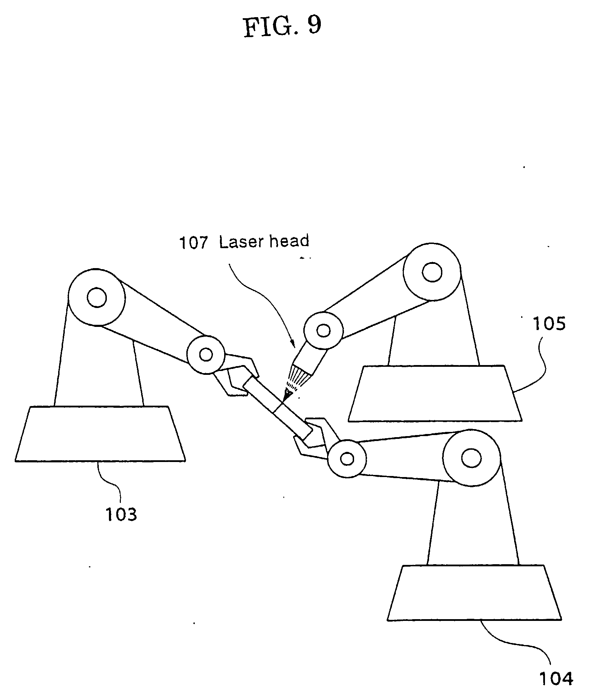

Fig. 9 is a constitutional view explaining the welding method in which a plural number of robots carry out welding operation by cooperation using the welding methods of conduit members according to the first and second embodiments of the present invention. In this welding method, members to be welded are fixed by a first and second robots 103 and 104, and welding operation is carried out by a third robot 105 provided with a laser head 107 which irradiates a YAG laser beam. The third robot 105 is so constituted that it can move the laser head 107 freely.

According to the above welding method, the laser head 107 can be freely moved by the third robot 105 so that a degree of freedom of a laser processing can be enlarged.

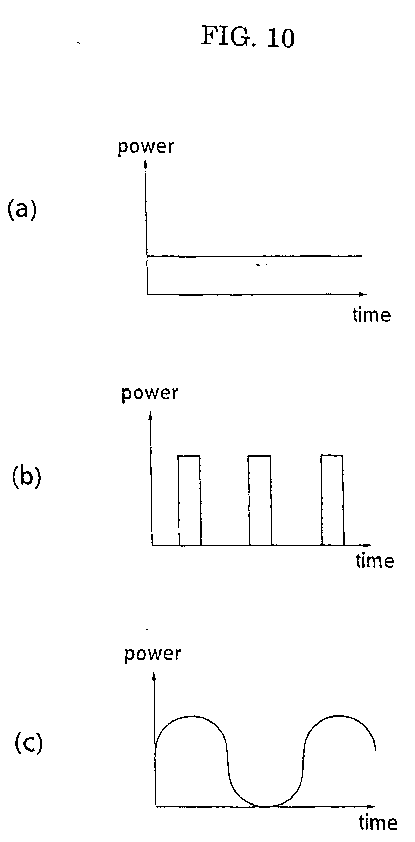

Figs. 10 are drawings showing wave shapes of laser beam used for the above-mentioned welding methods. Fig. 10(a) is a wave shape drawing showing a CW wave (continuous wave), Fig. 10(b) is a wave shape drawing showing a pulse wave, and Fig. 10(c) is a wave shape drawing showing a SIN wave.

In the above-mentioned welding method, it is preferred to use the CW wave, but depending on the uses, it is possible to optionally use other wave shapes. An advantageous point of the CW wave is that a stable welding can be easily obtained. An advantageous point of the pulse wave is that a high output peak value can be obtained. The SIN wave is to obtain a high output peak value.

6. Possibility of utilization in industry

The method for welding conduit members and the conduit member of the present invention can be applied to the following members. Incidentally, all the members explained in the following are to have the crystal structures of the above-mentioned (1) to (3) before fusing, and all the members formed by forging among the members explained below are to have the crystal structure of the above-mentioned (A) or (B).

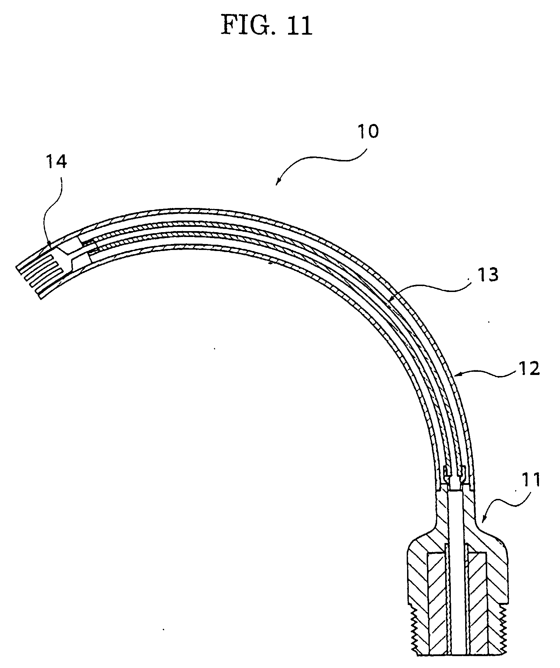

Fig. 11 is a sectional view showing a water-spitting device to which the present invention is applied. The water-spitting device 10 is constituted by a base edge portion 11, a tubular material 12, a connection hose 13 and a rectifying unit 14. To the base edge portion 11, one end of the tubular material 12 is connected. At the inside of the tubular material 12, the connection hose 13 and the rectifying unit 14 are arranged. One end of the connection hose 13 is connected to the base edge portion 11, and the other end of the connection hose 13 is connected to the rectifying unit 14. The base edge portion 11 is applied to cutting processing after forging, and the tubular material 12 is applied to bending processing to a straight tube.

This water-spitting device 10 is produced by arranging the connection hose 13 and the rectifying unit 14 in the tubular material 12, and then the base edge portion 11 and the tubular material 12 are welded by using the welding method shown in Fig. 1. This water-spitting device 10 utilizes a forged product sot hat it has high precision and its surface roughness is little. Also, a gap is provided between an inner surface of the tubular material 12 and an outer peripheral surface of the connection hose 13 so that a heat insulating effect is large.

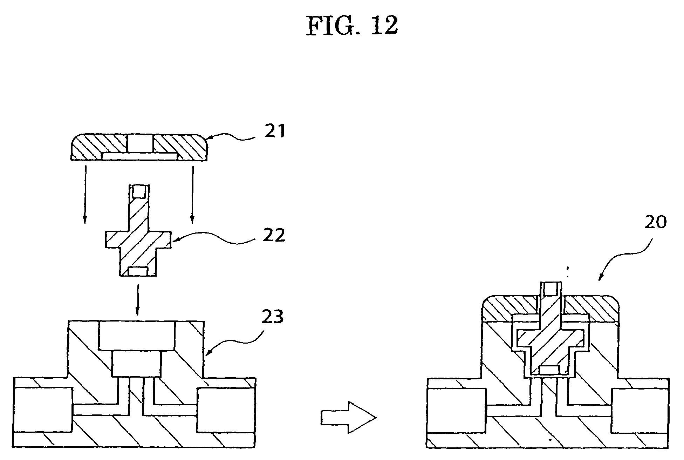

Fig. 12 is a sectional view showing a water-stopping tap to which the present invention is applied. The water-stopping tap has a route through which a fluid flows. The water-stopping tap 20 is constituted by a cap 21, a valve top 22 and a main body 23 to which cutting processing is applied after forging. This water-stopping tap 20 is produced by arranging the valve top 22 in the main body 23, and then welding the main body 23 and the cap 21 by using the welding method shown in Fig. 1. In this water-stopping tap 20, precision processing at the inside of the water-stopping tap 20 which had been conventionally impossible can be realized by combination of forging and welding, and further insertion of the valve top 22 can be realized.

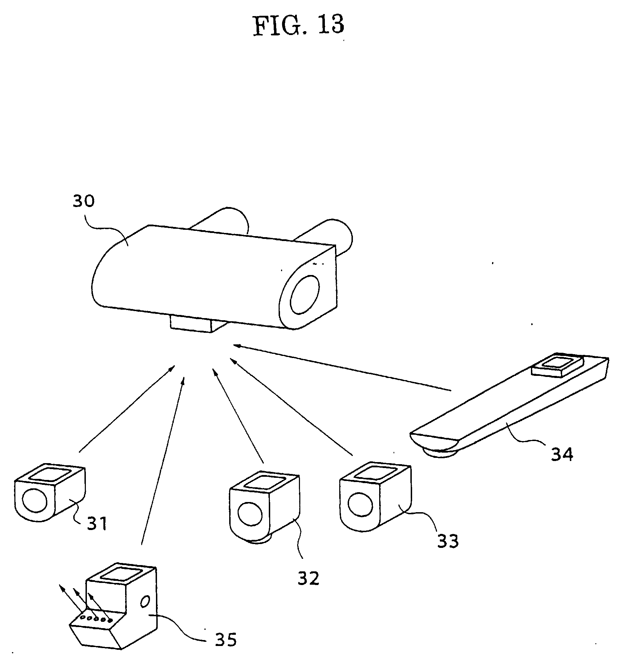

Fig. 13 is a schematic view showing a constructing image of a hot-water and water-mixing faucet to which the present invention is applied. This hot-water and water-mixing faucet has a route through which a fluid flows. The hot-water and water-mixing faucet 30 is produced by using an automatic open-close unit 31, a quantitative water-stopping unit 32, an automatic water stopping unit 33, a fixed spout unit 34, a body shower unit 35, etc., each of which is made by forging, are selectively welding to the hot-water and water-mixing faucet by using the welding method shown in Fig. 1. It has a structure in which each elemental part 31 to 35 is capable of subjecting to forging, cutting and polishing.

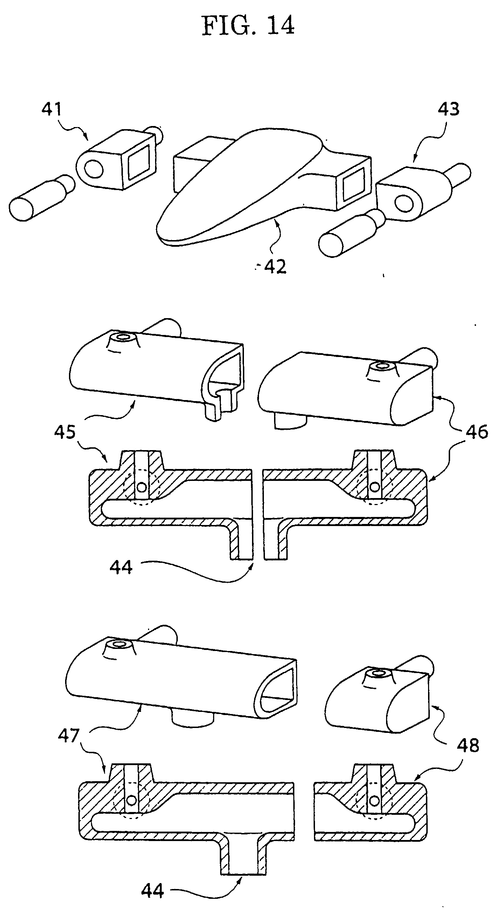

Fig. 14 are appearance views and sectional views showing a two-valve type hot-water and water-mixing faucet to which the present invention is applied. This two-valve type hot-water and water-mixing faucet has a route through which a fluid flows.

The two-valve type hot-water and water-mixing faucet shown in Fig. 14(a) is produced by forming a hot-water side water-inlet portion 41, a mixing portion 42 and a water side water-inlet portion 43 each by forging and cutting, and then, welding the hot-water side water-inlet portion 41 to one side of the mixing portion 42 and welding the water side water-inlet portion 43 to the other side of the mixing portion 42 using the welding method shown in Fig. 1.

The two-valve type hot-water and water-mixing faucet shown in Fig. 14(b) is produced by equally dividing a left-side unit 45 and a right-side unit 46 based on a water-spitting port 44 as a center, and after forming the left-side unit 45 and the right-side unit 46 each by forging and cutting, and the left-side unit 45 and the right-side unit 46 are welded by using the welding method shown in Fig. 1.

The two-valve type hot-water and water-mixing faucet shown in Fig. 14(c) is produced by disproportionally dividing a large-sized unit 47 including a water-spitting port 44 and a small-sized unit 48 not including the water-spitting port 44, and after forming the large-sized unit 47 and the small-sized unit 48 each by forging and cutting, and the large-sized unit 47 and the small-sized unit 48 are welded by using the welding method shown in Fig. 1.

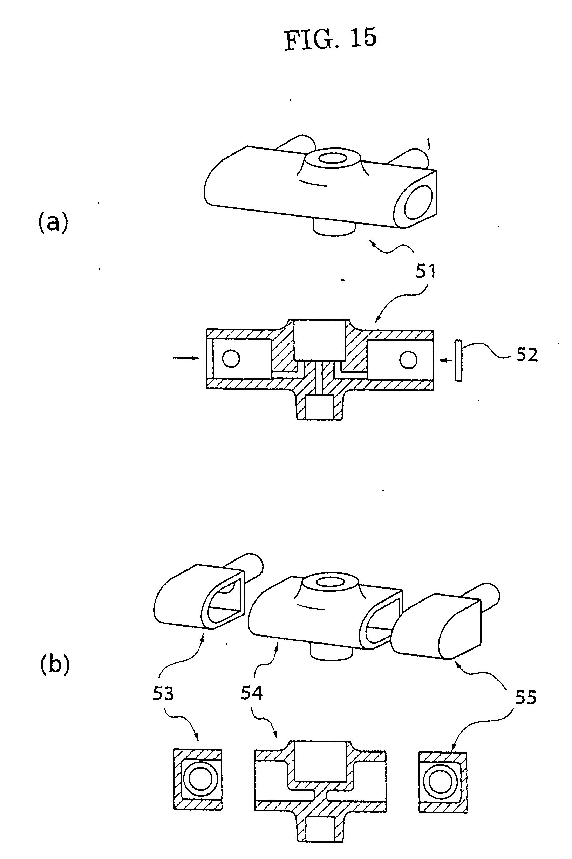

Fig. 15 are appearance views and sectional views showing a single-valve type hot-water and water mixing-faucet to which the present invention is applied. This single-valve type hot-water and water-mixing faucet has a route through which a fluid flows.

The single-valve type hot-water and water-mixing faucet shown in Fig. 15(a) is produced by forming a main body 51 by forging and cutting, and then, covering a lid 52 to the main body 51.

The single-valve type hot-water and water-mixing faucet shown in Fig. 15(b) is produced by dividing a hot-water side water-inlet portion 53, a mixing portion 54 and a water-side water-inlet portion 55, forming each portion by forging and cutting, and then, welding the hot-water side water-inlet portion 53 to one side of the mixing portion 54 and the water side water-inlet portion 55 to the other side of the mixing portion 54 using the welding method shown in Fig. 1.

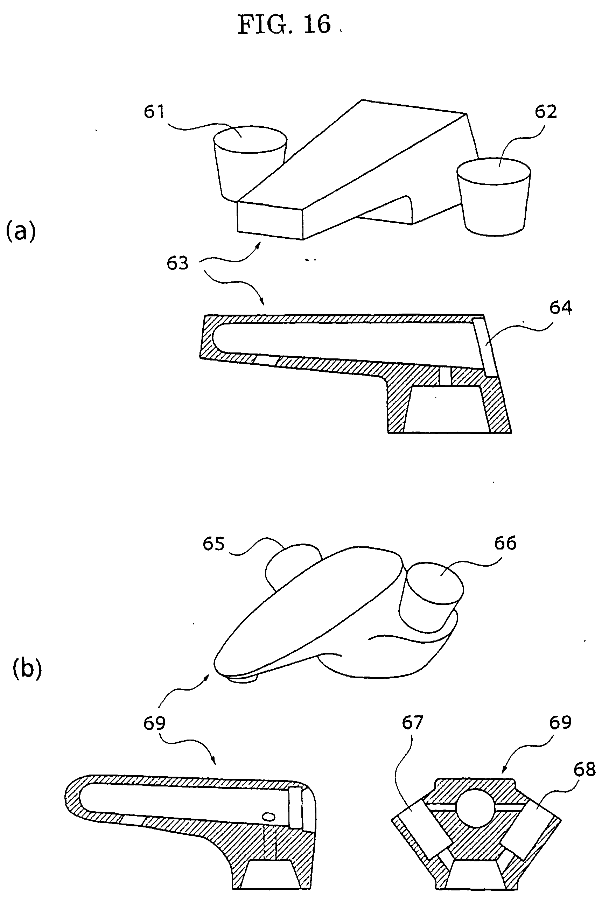

Fig. 16 are appearance views and sectional views showing a faucet for a washstand to which the present invention is applied. This faucet has a route through which a fluid flows.

The faucet shown in Fig. 16(a) is produced by forming control knobs 61 and 62 and a separate main body 63 each by forging and cutting, and then, covering an opening portion of said main body 63 with a lid 64.

The faucet shown in Fig. 16(b) is produced by forming a main body 69 having installation holes 67 and 68 and control knobs 65 and 66 each by forging and cutting, and then, installing the control knobs 65 and 66 to the installation holes 67 and 68.

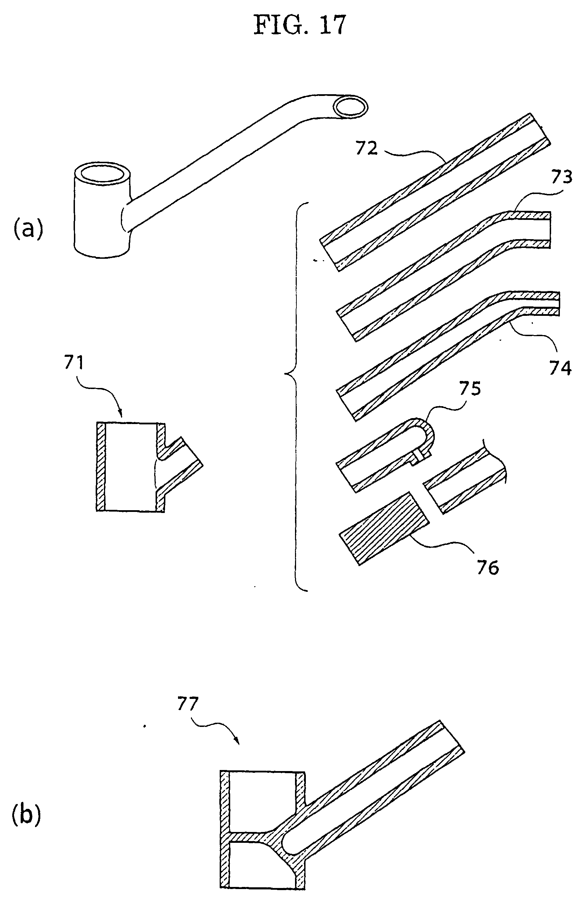

Fig. 17 are an appearance view, joining image views and sectional views showing a faucet for a kitchen to which the present invention is applied.

The faucet shown in Fig. 17(a) is produced by forming each of a faucet main body 71, a straight tube 72, a bending tube 73, a bulging tube 74, a short length tube 75 and a function-exchange unit 76 by forging and cutting, and then, selectively welding using the welding method shown in Fig. 1.

The faucet shown in Fig. 17(b) is produced by forging and cutting a faucet whole body 77.

## Claims

1. A method for welding conduit members which comprises, in a method for welding conduit members produced by preparing two or more members insides of which are hollow and integrally joining edge surfaces of said members by welding,

   irradiating electromagnetic wave to fuse both edge surfaces and weld them.

2. A method for welding conduit members which comprises, in a method for welding conduit members produced by preparing two or more members insides of which are hollow and integrally joining edge surfaces of said members by welding,

   irradiating electromagnetic wave to the surface of said members to the direction inclined to a predetermined angle from a vertical direction whereby fusing and welding said both edge surfaces.

3. A method for welding conduit members which comprises, in a method for welding conduit members produced by preparing two or more members insides of which are hollow and integrally joining edge surfaces of said members by welding,

   irradiating electromagnetic wave to the edge surface of said members and irradiating an assist gas whereby fusing and welding said both edge surfaces.

4. A method for welding conduit members which comprises, in a method for welding conduit members produced by preparing two or more members insides of which are hollow and integrally joining edge surfaces of said members by welding,

   forming a step portion at the edge portion of one of the above-mentioned members for overlapping one another,
   joining the edge portion of the other member to said step portion and
   irradiating electromagnetic wave to the joining portion whereby fusing and welding said both edge surfaces.

5. A method for welding conduit members which comprises, in a method for welding conduit members produced by preparing two or more members insides of which are hollow and integrally joining edge surfaces of said members by welding,

   having the first welding step of irradiating electro-magnetic wave to fuse said edge surfaces to weld the portion, and

the second welding step of irradiating electromagnetic wave and feeding a filler to melt said edge surface and said filler to weld the portion.

6. A method for welding conduit members which comprises, in a method for welding conduit members produced by preparing two or more members insides of which are hollow and integrally joining edge surfaces of said members by welding,

   irradiating electromagnetic wave while weaving whereby fusing and welding said both edge surfaces.

7. A method for welding conduit members which comprises, in a method for welding conduit members produced by preparing two or more members insides of which are hollow and integrally joining edge surfaces of said members by welding,

   irradiating a first electromagnetic wave so that said edge surfaces are fused and welded, and irradiating a second electromagnetic wave to the welded edge surfaces and feeding a filler to the same whereby fusing and welding said edge surfaces and said filler.

8. A method for welding conduit members which comprises, in a method for welding conduit members produced by preparing two or more members insides of which are hollow and integrally joining edge surfaces of said members by welding,

   forming a thick portion at the neighbor of the edge surface of one member among the members,
   joining said edge surface to the edge surface of the other member, and
   irradiating electromagnetic wave to the joined portion and the thick portion whereby fusing and welding said edge surfaces.

9. A method for welding conduit members which comprises, in a method for welding conduit members produced by preparing two or more members insides of which are hollow and integrally joining edge surfaces of said members by welding,

   which is a method for welding conduit members which welds said edge surfaces by irradiating electromagnetic wave,
   photographing the portion to be joined of said members,
   detecting from the photographed image data a difference in position at which the electromagnetic wave is to be irradiated, and
   irradiating the electromagnetic wave by correcting the difference.

10. The method for welding conduit members according to any one of Claims 1 to 9, wherein at least one of the hollow members is fused, and said one of the hollow members is constituted by an alloy material containing at least two kinds of metals when the above-mentioned welding is carried out and

    the boiling point of at least one of the metal contained in said alloy material is lower than the melting point of said alloy material.

11. The method for welding conduit members according to Claim 10, wherein said alloy material is brass.

12. The method for welding conduit members according to Claim 11, wherein an apparent Zn content of said alloy material is 25 wt% or more.

13. The method for welding conduit members according to Claim 10, wherein said alloy material is a copper alloy containing Zn.

14. The method for welding conduit members according to any one of Claims 1 to 13, wherein said electromagnetic wave is a laser beam or a YAG laser.

15. A method for welding conduit members which comprises a method for welding conduit members wherein members comprising a brass material or a member composed of the other metal material are prepared and at least the member comprising said brass material is fused by irradiating electromagnetic wave whereby welding said member and said metal material, and

    crystal structure before fusing the member comprising the above brass material satisfies at least one of the following (1) to (3):

    (1) An average crystal grain size is 15 $\mu$m or less.
    (2) It contains a $\beta$-phase and an Sn concentration in the $\beta$-phase is 1.5 wt% or more.
    (3) It contains a $\gamma$-phase, an Sn concentration in the $\gamma$-phase is 8 wt% or more, and the $\gamma$-phase surrounds the $\beta$-phase.

16. A method for welding conduit members which comprises preparing a member comprising a brass material and a member comprising other metal material, and fusing at least the member comprising said brass material by irradiating an electromagnetic wave to weld said member and the member comprising said metal material,

    wherein an average crystal grain size of the member comprising the brass material before fusing is 10 $\mu$m or less.

17. The method for welding conduit members according to Claim 15 or 16, wherein the member comprising said brass material and the member comprising said other metal member are both hollow members.

18. The method for welding conduit members according to any one of Claims 15 to 17, wherein said electromagnetic wave is a laser beam or a YAG laser.

19. A method for welding conduit members which comprises forming two of metal members being integrally joined by welding in a pressurized atmosphere higher than the atmospheric pressure.

20. The method for welding conduit members according to Claim 19, wherein said two metal members are welded by forming a molten pool to at least one of the metal members.

21. The method for welding conduit members according to Claim 19 or 20, wherein at least one of said two metal members is a member comprising an alloy material containing at least two kinds of metals, and said two metal members are welded by fusing at least one of said members,

    a boiling point of at least one kind of the metal contained in said alloy material is lower than the melting point of said alloy material.

22. The method for welding conduit members according to Claim 21, wherein said alloy material is brass.

23. The method for welding conduit members according to Claim 22, wherein an apparent Zn content of said alloy material is 25 wt% or more.

24. The method for welding conduit members according to Claim 21, wherein said alloy material is a copper alloy containing Zn.

25. The method for welding conduit members according to any one of Claims 19 to 24, wherein said pressure atmosphere is formed by an inert gas or a nitrogen gas.

26. The method for welding conduit members according to any one of Claims 19 to 25, wherein said two metal members are maintained in said pressure atmosphere by arranging said two metal members in a pressure vessel.

27. The method for welding conduit members according to Claim 26, wherein said metal members are welded by irradiating an electromagnetic wave to said metal members from outside of said pressure vessel.

28. The method for welding conduit members according to Claim 27, wherein said metal members are fused by electromagnetic induction heating.

29. The method for welding conduit members according to Claim 27, wherein said electromagnetic wave transmitted through a transmission portion formed at said pressure vessel is focused to the joining portion of said metal members to be welded.

30. The method for welding conduit members according to Claim 29, wherein said electromagnetic wave is a laser beam or a YAG laser.

31. The method for welding conduit members according to Claim 29 or 30, wherein said electromagnetic wave is more focused when it is irradiated to said joining portion than it is passed through said transmission portion.

32. The method for welding conduit members according to any one of Claims 1 to 31, wherein said conduit members are a water-spitting device which spits water.

33. Conduit members which comprise, in conduit members formed by integrally joining edge surfaces of members divided into at least two or more and insides of which are hollow by welding,

    said members are formed by applying forging and cutting processing to rod materials.

34. The conduit members according to Claim 33, wherein said hollow shape at the inside of said member is formed by applying forging and cutting processing to the rod material.

35. The conduit members according to Claim 33 or 34, wherein said hollow members both comprise brass materials, are welded by fusing at least one of the members, and the crystal structure of said brass materials at forging satisfies the following (1) or (2):

    (1) in a recrystallization temperature region, an average crystal grain size is 15 $\mu$m or less, or 10 $\mu$m or less, an area ratio of a $\beta$-phase is 30 to 80% and an $\alpha$-phase and the $\beta$-phase are uniformly dispersed.
    (2) in a recrystallization temperature region, an average crystal grain size is 15 $\mu$m or less, or 10 $\mu$m or less, an area ratio of an $\alpha$-phase is 44 to 65%, an area ratio of a $\beta$-phase is 10 to 55% and an area ratio of a $\gamma$-phase is 1 to 25%, and the $\alpha$-phase, the $\beta$-phase and the $\gamma$-phase are uniformly dispersed.

**36.** The conduit members according to Claim 35, wherein said hollow members are forged at a temperature region of 650°C or lower.

**37.** The conduit members according to Claim 33 or 34, wherein said hollow members both comprises brass material, are welded by fusing at least one members and said members are forged at a temperature region of 650°C or lower.

**38.** The conduit member according to Claim 35, wherein a crystal structure of said members before fusing said hollow members satisfies at least one of the following (1) to (3).

  (1) an average crystal grain size is 15 μm or less.
  (2) it contains a β-phase, and an Sn concentration in the β-phase is 1.5 wt% or more.
  (3) it contains a γ-phase, an Sn concentration in the γ-phase is 8 wt% or more and the γ-phase surrounds the β-phase.

**39.** The conduit member according to Claim 35, wherein the average crystal grain diameter of said members before fusing said hollow member is 10 μm or less.

**40.** The conduit members according to any one of Claims 33 to 39, wherein said conduit members are a water-spitting device which spits water.

# FIG. 1

6

6a YAG laser-beam

5 Preventing temperature raising by defocusing

3

6b Focused position

1a    2    1b    4

# FIG. 2

6

7

6a YAG laser beam

6b Focused position

7a Assist gas

1a

1b

# FIG. 3

## (a)

## (b)

# FIG. 4

(a) Occurrence of undercut

(c) Burying undercut with filler

82 Filler

(b) 81 Filler feeding device

# FIG. 5

84 Mirror,

6a Laser beam,

85 Weldline    Weaving

4a Tubular member made of brass

4b Tubular member made of brass

# FIG. 6

6a  Laser beam

87  Half mirror

88  Total reflection mirror

90

89  Condenser

First welding,

Second welding,

Welding
    progressing direction

82  Filler

81

# FIG. 7

## (a)

Occurrence of undercut

Welding

## (b)

Paddy shape

Welding

Undercut is counterbalanced
by paddy portion

92          93

92          93

# FIG. 8

## (a)

**94** CCD camera

**97** Work position-control device

**101**

**95** Image treatment device

**96** Monitor

## (b)

**98** Welding point

**99** Weldline

**100** Positional error

# FIG. 9

107 Laser head

105

103

104

# FIG. 10

(a)

power

time

(b)

power

time

(c)

power

time

FIG. 11

EP 1 035 259 A1

FIG. 12

# FIG. 13

# FIG. 14

# FIG. 15

(a)

51

52

(b)

53 54 55

# FIG. 16

(a)

61  62

63

64

(b)

65  66

69

67  69

68

# FIG. 17

(a)

72

73

71

74

75

76

(b)

77

## INTERNATIONAL SEARCH REPORT

| International application No. |
|---|
| PCT/JP98/04868 |

**A. CLASSIFICATION OF SUBJECT MATTER**
Int.Cl⁶ E03C1/042

According to International Patent Classification (IPC) or to both national classification and IPC

**B. FIELDS SEARCHED**

Minimum documentation searched (classification system followed by classification symbols)
Int.Cl⁶ E03C1/042, B23K26/00

Documentation searched other than minimum documentation to the extent that such documents are included in the fields searched
Jitsuyo Shinan Koho          1922-1996    Toroku Jitsuyo Shinan Koho    1994-1999
Kokai Jitsuyo Shinan Koho    1971-1999    Jitsuyo Shinan Toroku Koho    1996-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 1-182423, A (Kitamura Valve Co., Ltd.), 20 July, 1989 (20. 07. 89), Full text ; Figs. 1 to 3 (Family: none) | 1-3, 6, 8-14 33, 34, 37, 40 |
| A | Full text ; Figs. 1 to 3 (Family: none) | 5, 7, 35, 36, 38, 39 |
| Y | JP, 57-206589, A (Kawaguchiko Seimitsu Co., Ltd.), 17 December, 1982 (17. 12. 82), Full text ; Figs. 1, 2 (Family: none) | 1-4, 19-32 |
| Y | JP, 6-249354, A (TOTO Ltd.), 6 September, 1994 (06. 09. 94), Full text ; Figs. 1 to 8 (Family: none) | 4 |
| Y | JP, 8-150474, A (Mitsubishi Heavy Industries,Ltd.), 11 June, 1996 (11. 06. 96), Full text ; Figs. 1 to 3 (Family: none) | 6, 9, 14 |

| ☒ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 January, 1999 (26. 01. 99) | 2 February, 1999 (02. 02. 99) |

| Name and mailing address of the ISA/ Japanese Patent Office | Authorized officer |
|---|---|
| Facsimile No. | Telephone No. |

Form PCT/ISA/210 (second sheet) (July 1992)

**INTERNATIONAL SEARCH REPORT**

International application No.

PCT/JP98/04868

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 6-251675, A (NEC Kansai,Ltd.), 9 September, 1994 (09. 09. 94), Full text ; Figs. 1 to 6 (Family: none) | 8 |
| A | JP, 59-107051, A (Japan Energy Corp.), 21 June, 1984 (21. 06. 84), Full text ; Figs. 1, 2 (Family: none) | 15-18 |
| Y | JP, 6-69621, B2 (Toyota Motor Corp.), 7 September, 1994 (07. 09. 94), Full text ; Figs. 1 to 12 (Family: none) | 19-32 |

Form PCT/ISA/210 (continuation of second sheet) (July 1992)